# EUROPEAN PATENT APPLICATION

(11) **EP 1 281 607 A1**
(43) Date of publication of application: **05.02.2003**
(21) Application number: 02015480.3
(22) Date of filing: 12.07.2002
(51) Int. Cl.: B62J 1/18

(54) **An improved bicycle saddle**

(30) Priority: 02.08.2001 IT VI20010167
(71) Applicant: SELLE SAN MARCO DI GIRARDI COMM. LUIGI S.p.A., 36028 Rossano Veneto (Vicenza) (IT)
(72) Inventor: Girardi, Antonio, 36028 Rossano Veneto, (Vicenza) (IT)
(74) Representative: Bettello, Pietro, Dott. Ing.

(57) **Abstract**

An improved saddle, in particular for sports bicycles, mountain trail bicycles, city bicycles and others is of the type which has an opening (5) with a longitudinal profile.
This opening (5) engages substantially the central portion of the bearing body and partially also the front portion which is more tapered. The saddle (1) is characterized by the fact that the longitudinal opening (5) is padded with a material different with respect to the material which constitutes the padding of the remainder of the saddle.

## Description

### Field of The Invention

The present invention relates to an improved saddle and, more particularly, an improved bicycle saddle.

### Background of The Invention

It is well known that there are in the market several types of saddles, particularly suited to be mounted on sport bicycles. The saddles comprise in their simplest conformation, a rigid body with a lengthened shape and an outline so that a central portion and two portions are determined, one in the back which widens laterally and the other in front which is tapered. On the lower part of the saddle is placed a metallic support which is connected to the frame of the vehicle.

In the present state of the art, the rigid body or bearing body of the saddle is formed of a single piece, obtained normally by injection molding plastic material, or by molding a sheet, or by forming shells of noble fibers, such as carbon, Kevlar and similar materials.

On the bearing body, which determines the shape and the dimensions of the saddle, for the purpose of rendering the saddle suitable for the different types of vehicles, such as the normal bicycle, the bicycle for sports and the mountain trail bicycles, the city bicycle and others, a padding is applied which normally is covered by a cover.

For the purpose of obtaining greater comfort for the cyclist some saddles have been conceived which, with particular constructive techniques, confer to the bearing body a certain elasticity, reduce the weight and also in sports uses allow optimal air circulation. In particular U.S. Patent No. 4,898,422, which is the result of intense research and clinical tests carried out by the American doctor Robert V. West, describes a saddle which is particularly suitable to protect adequately the parts of the body of the cyclist which are subjected to the greatest pressure, that is the parts which are placed corresponding to the prostatic area. This advantage is obtained by providing an opening with a longitudinal profile on the body of the saddle, the opening engaging substantially the central portion of the bearing body and partially also the front part which is more tapered.

The hole being formed in addition to contributing to the increase of elasticity in the points of support of sitting, results in a total absence of compression in the perianal area of the body of the cyclist.

### Summary of The Invention

The object of the invention is to provide a saddle equipped with a longitudinal opening on the bearing body, so that the saddle has ergonomic characteristics and comfort for the cyclist superior with respect to what may be achieved with similar saddles of known type, rendering the saddle suitable both for males as well as females.

This object is achieved by providing a saddle in which the longitudinal central opening is padded with a material different from the material which constitutes the remainder of the saddle or is padded with the same type of material which however offers physical properties, such as density, softness, elasticity, superior with respect to the remainder of the material which constitutes the padding of the saddle.

This different material, in addition to engaging the edge of the longitudinal opening whereby avoiding for the cyclist the tedious sensation of the profile of a corner, may extend on the surface of the saddle, occupying other areas of the saddle where the use of different materials is already present, such as the gel or similar materials, thus greatly increasing the comfort for the cyclist.

### Brief Description of The Drawings

The characteristics of the invention will be more apparent from the description of a possible embodiment, provided as a non-limiting example, by reference to the attached drawings, in which:
- Figs 1 and 2: show two planar views of the saddle of this invention;
- Fig. 3: shows an elevational view of the saddle of the invention partially in cross-section, without the covering;
- Fig. 4: is a transverse cross-sectional view of the saddle taken along line IV-IV of Fig. 3;
- Fig. 5: is an elevational, view of the saddle of the invention, partially in cross-section, with a cover; and
- Fig. 6: is a transverse cross-sectional view of the saddle taken along line VI-VI of Fig. 5.

### Description of The Invention

As shown in the drawings, the improved saddle of the invention shown overall with reference numbers 1A and 1B, comprise a shaped body or bearing body (2) on which is applied a layer of padding (3) eventually covered by the material of cover (4).

The two shown saddles are of the type which comprises, corresponding to the central part of the shaped body, a longitudinal opening or hole (5).

The characteristic of the invention consists of providing that the border (6) of the hole (5) is made of a material different from the material used to make the padding (3).

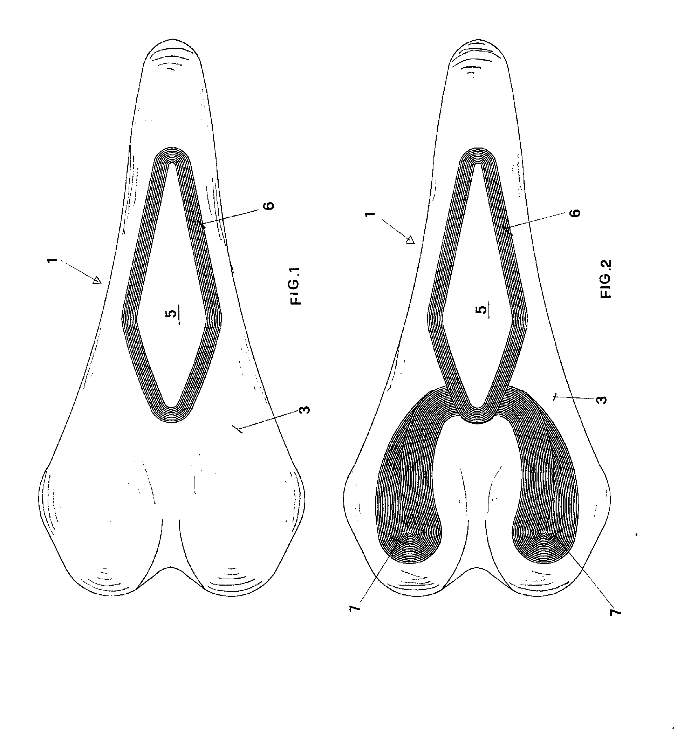

As shown in Fig. 2, the type of material used to make border (6) of hole (5) is extended beyond the border so as to cover other areas (7) of the saddle, thus increasing the comfort for the cyclist.

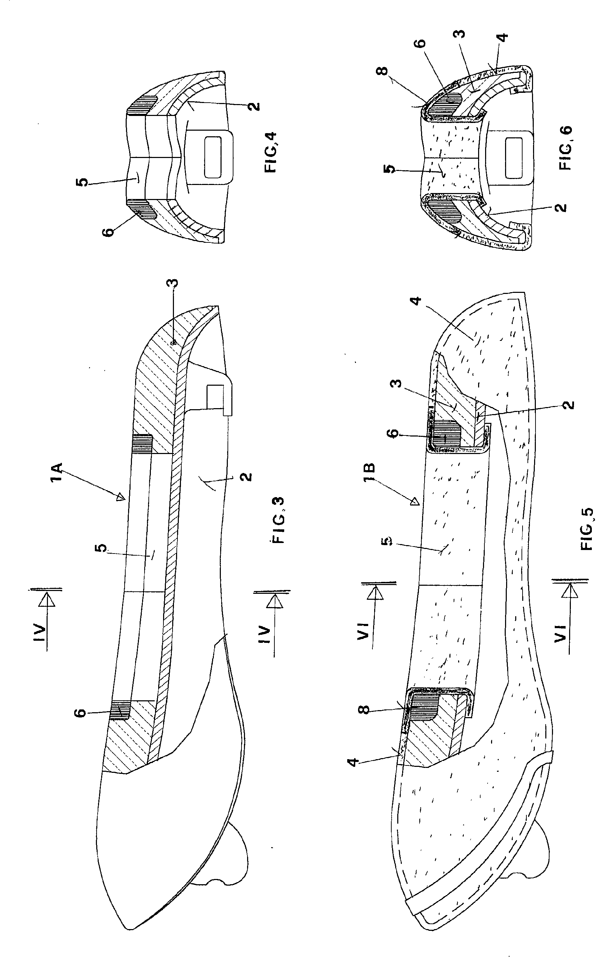

Finally as shown in Figs. 5 and 6, the invention provides that cover (4) is made corresponding to border (6) with a material (8) different from the material used to make the remainder of the cover.

By way of example, material (8) of the cover which is positioned above the parts of border (6), may be of the lycra or neoprene type while the remainder of the cover which wraps the padding is made with a classic material such as leather, imitation leather and similar materials.

On the basis of what has been described hereinabove it is evident that the invention allows to achieve greater comfort for the user.

Obviously the invention is capable of many variations and modifications, as the components and the materials being used which may be substituted by other materials technically equivalent, without however, departing from the ambit of the clains which are attached hereto.

## Claims

1. A saddle for sports bicyles, mountain trail bicycles, city bicycles and others of the type which has an aperture with longitudinal profile, which engages substantially the central part of the bearing body and partially also the front portion which is more tapered, said saddle being **characterized by** the fact that said aperture with longitudinal profile is padded with a material different from the material which constitutes the padding of the remainder of the saddle.

2. The saddle according to claim 1, **characterized by** the fact that said aperture with longitudinal profile is padded with the same type of material which constitutes the padding of the saddle but with physical properties such as density, softness and elasticity with a different value with respect to the remainder of the padding.

3. The saddle according to claim 2, **characterized by** the fact that the material used to make the border of said aperture with longitudinal profile extends on the surface of the saddle to occupy other areas of the saddle.

4. The saddle according to claim 3, **characterized by** the fact that the material used to make the border of said aperture extends from said aperture up to the other areas of the saddle where the use of different materials such as gel or similar material is used.

5. The saddle according to one or more of the preceding claims, **characterized by** the fact that the covering corresponding to the border of said aperture is made of a material different from the material used to make the remainder of said covering.

6. The saddle according to claim 5, **characterized by** the fact that the material of the covering which covers the border of said aperture is of the same type of material used to make the remainder of said covering but has physical properties different from the material used to make the remainder of said covering.

7. The saddle according to one or more of the preceding claims constituted by a shaped body or bearing body (2) on which is applied a layer of padding (3), eventually covered by the material of the covering (4), of the type which comprises, corresponding to the central part of the shaped body a longitudinal opening or a hole (5), the saddle being **characterized by** the fact that the border (6) of said hole (5) is made of a material different from the material used for padding (3).

8. The saddle according to claim 7, **characterized by** the fact that the type of material used for the border (6) of hole (5) extends beyond said border going to cover also other areas (7) of the saddle.

9. The saddle according to claims 7 and 8, **characterized by** the fact that cover (4) is made, corresponding to border (6), with a material (8) different from the material used to make the remainder of said cover.
